# EUROPEAN PATENT SPECIFICATION

(11) **EP 0 857 309 B1**
(45) Date of publication and mention of the grant of the patent: **30.05.2007**
(21) Application number: 95933564.7
(22) Date of filing: 18.10.1995
(51) Int. Cl.: G02B 5/02, F21S 11/00, E06B 9/24

(54) **LIGHT-DIFFUSING PANEL AND WINDOW SHADE USING SAME**
LICHTDIFFUSORSCHIRM UND FENSTERBLENDE, DIE DIESEN BENUTZT
PANNEAU DIFFUSANT LA LUMIERE ET STORE METTANT CE PANNEAU EN APPLICATION

(43) Date of publication of application: 12.08.1998
(73) Proprietor: Oyama, Nobuo, Tokyo 182-0004 (JP)
(72) Inventor: OYAMA, Nobuo, Tokyo 182-0004 (JP); TAKAHASHI, Sumie Tsukui-21 Building,, Tokyo 113-0033 (JP)
(74) Representative: Winter, Brandl, Fürniss, Hübner Röss, Kaiser, Polte Partnerschaft Patent- und Rechtsanwaltskanzlei
(86) International application number: PCT/IB1995/000888
(87) International publication number: WO 1997/014982

(56) References cited:
- EP-A1- 0 092 322
- WO-A1-95/04295
- FR-A- 1 178 353
- FR-A1- 2 704 326
- GB-A- 190 920 460

## Description

### FIELD OF THE INVENTION

The present invention relates in general to optical transmission media and in particular to a structure for diffusing light.

### BACKGROUND OF THE INVENTION

It is very desirable to have a room with a window. In an office, a window is a symbol of status. It also provides a link to the outside.world. In a house, the window allows sunlight to enter and brighten a room.

The window is not always desirable, however, especially when intense rays of sunlight are streaming into the room. Looking out a clear window, directly into the incoming rays, can hurt one's eyes. Looking out through a dirty window is no better, as particles of dust and dirt cause the light to scatter randomly and create a blinding Light. Sitting directly in the path of the intense rays can be discomforting to the skin and can even result in sunburn.

To combat these problems, windows are outfitted with blinds, curtains and shades made of opaque materials. When opened, the blinds, curtains and shades allow a clear view outside the window. When the blinds, curtains and shades are closed, however, the direct sunlight is blocked. Although the direct rays are no longer bothersome, the room looses the benefits of sunshine: good lighting and natural heating.

JP-A-6 033 671 shows a window curtain comprising a double-sided fibers sheet for controling the directional properties of light and the degree of diffusion. This is achieved by a fibre pattern having light refraction properties.

It is an objective of the present invention to provide a that window shade comprising light-diffusing panels that diffuse light, and a cover for a window.

### SUMMARY OF THE INVENTION

The object is solved by the features defined in claims 1 and 5 of the invention.

### BRIEF DESCRIPTION OF THE DRAWINGS

Figure 1 is a perspective view of a panel used in one embodiment of the present invention;
Figure 2 is a schematic representation of light being diffused by a light-transmissive panel;
Figure 3 is a schematic representation of light being diffused by a light-reflective panel;
Figures 4-9 are perspective views of alternative panels that can be used in the present invention;
Figure 10 is a schematic representation of a window shade made of the light-diffusing panels according to one embodiment of the present invention;
Figure 11 is a schematic representation of a light being diffused by the window shade shown in Figure 10;
Figure 12 is a schematic representation of a shutter using the light-diffusing panels; and
Figure 13 is schematic representation of a thin film of the light-diffusing panel adhered to a window.

### DETAILED DESCRIPTION OF THE INVENTION

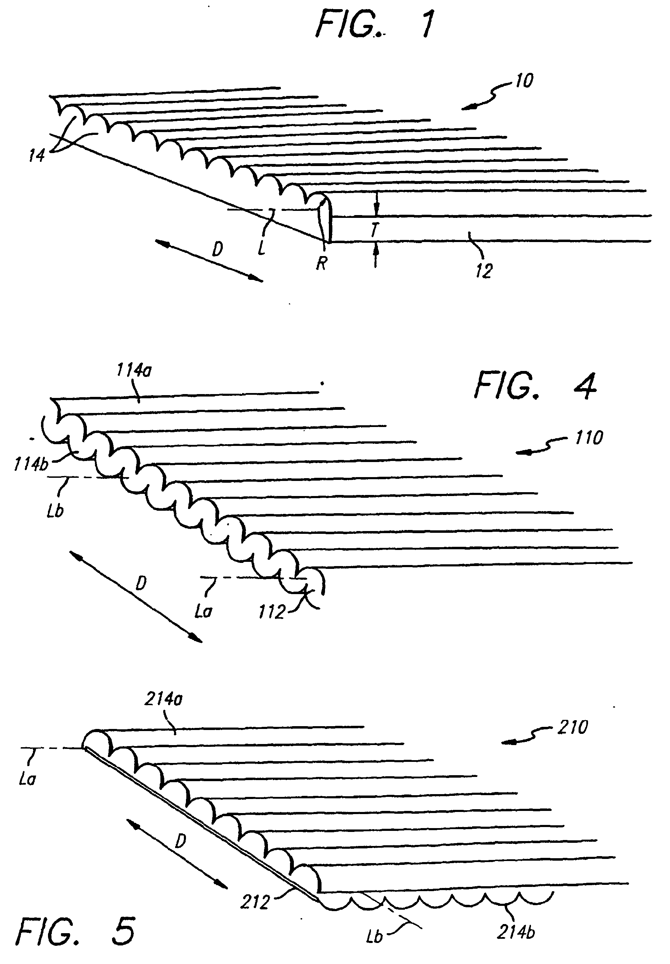

Figure 1 shows a panel 10 including a sheet 12 and a plurality of elongated ribs 14 located on one surface of the sheet 12. Each rib 14 is semicircular in cross-section and has a substantially smooth outer surface. The ribs 14 are arranged side-by-side, in a single row with their longitudinal axes L being parallel to one another. Resulting from this arrangement is a series of parallel striations on the ribbed surface of the sheet 12.

The sheet 12 and ribs 14 are made of a transparent or translucent material. The material can be a polymer, such as Polymethyl Meta Acrylate ("PMMA"), polyester, polyvinyl chloride, polyethylene, or polycarbonate. In the alternative, the material could be a glass or crystal. The sheet 12 and ribs 14 could be made either flexible or rigid.

When light impinges the panel 10, it, is diffused in a direction along the sheet 12 and normal to the longitudinal axes L of the ribs 14. This direction is hereinafter referred to as the "diffusion axis D." The light can impinge either the ribbed surface of the sheet 12 or the surface that is not ribbed. Either way, the impinging light will be diffused along the diffusion axis D. The only difference is that the ribbed surface of the sheet 12 will reflect less light than the surface that is not ribbed.

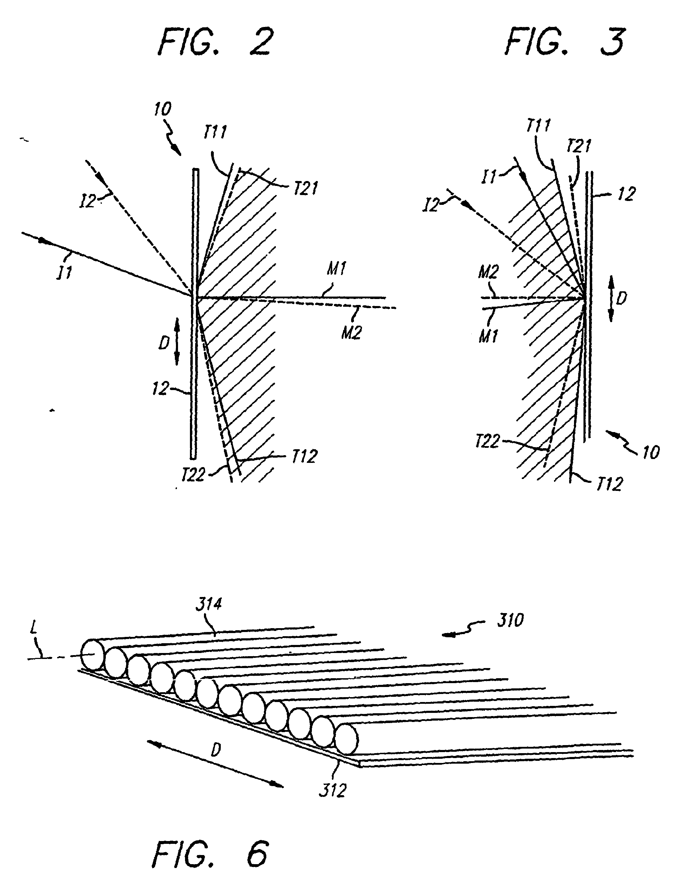

Figure 2 shows a panel 10 adapted to transmit light. Looking down at the top of the panel 10, two chief rays 11 (in solid lines) and 12 (in dashed lines) are seen striking the sheet 12 at different angles of incidence. Both chief rays I1 and I2 are transmitted by the sheet 12 and diffused along the diffusion axis D. The transmitted rays T11 and T12 corresponding to the incident chief ray I1 have a median of diffusion M1, and the transmitted rays T21 and T22 corresponding to the incident chief ray I2 have a different median of diffusion M2. It can be seen that the medians M1 and M2 are nearly coincident, even though their chief rays I1 and I2 have different angles of incidence. Moreover, both medians M1 and M2 are substantially perpendicular to the diffusion axis D.

The transmitted rays T11 and T22 define an angle known as the "diffusion angle." The diffusion angle provides a measure of the ability of the panel 10 to disperse light.

Figure 3 shows a panel 10 adapted to reflect light. The ribbed surface or the unribbed surface of the sheet 12 can be coated with a reflective material such as aluminum, by evaporation, sputtering or any other suitable means. Chief rays I1 and 12 are reflected off the surface and diffused along the diffusion axis D. As can be seen, the medians of diffusion M1 and M2 for the chief rays I1 and I2 are both substantially coincident and normal to the surface of the sheet 12.

The panel 10 can be made by an embossing process. For example, a panel 10 was made by placing a sheet 12 in a mold and pressing the sheet 12 until the ribs 14 were formed. The sheet 12 had a thickness T of 1.7 mm, and the ribs 14 had a uniformly semi-circular cross-section, with a radius of 0.3 mm. The panel 10 had a light transmissibility of greater than 80% and a diffusion angle of approximately 160 degrees.

Figure 4 shows another panel 110. The panel 110 is made by embossing elongated ribs 114a and 114b on both surfaces of a sheet 112. The longitudinal axes La and Lb of the ribs 114a and 114b on both sides of the sheet 112 are parallel to one another and extend in the same direction. The extra ribs 114b serve to increase the amount of diffusion provided by the panel 110.

In the panel 210 shown in Figure 5, ribs 214a and 214b are embossed on both surfaces of the sheet 212, with their longitudinal axes La and Lb lying in the same plane. However, the longitudinal axes La of the ribs 214a on one surface are orthogonal to the longitudinal axes Lb of the ribs 214b on the other surface. Crossing the longitudinal axes La and Lb causes a further increase in the amount of diffusion, which should eliminate any glare produced by the other panels 10 and 110.

Figure 6 shows yet another panel 310. The panel 310 includes a thin sheet 312 that is substantially planar and a single row of monofilament fibers 314 adhered to one surface of the sheet 312. The fibers 314 are substantially straight, with their longitudinal axes L lying in the same plane and being substantially parallel to one another. The monofilament fibers 314 can be made fishing line having a diameter of 0.14 mm. A panel 310 was made with monofilament fibers having a 0.14 and a sheet 312 having a thickness of 3 mm. The diffusion angle was approximately 160 degrees and transmissibility was over 80%.

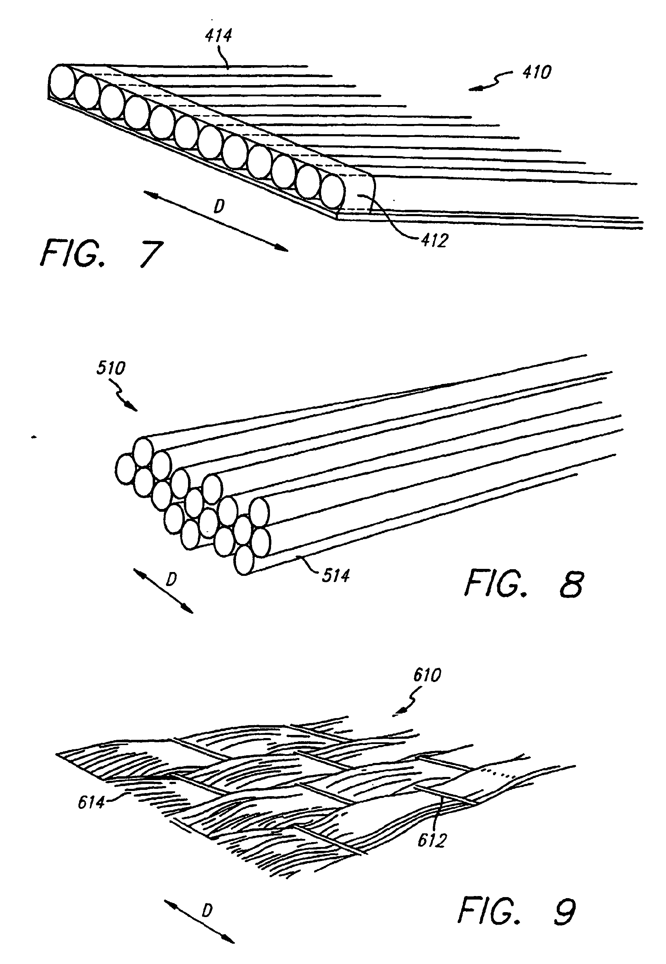

Figure 7 shows a panel 410, again with the monofilament fibers 414 in a single row, but without a sheet. Instead, cloth strips 412 are used to hold the ends of the fibers 414 together. A rectangular panel 410, ten centimeters long and five centimes wide, was made of fishing wire having a diameter of 0.14 mm.

Figure 8 shows yet another panel 510. The panel 510 includes a bundle of monofilament fibers 514 arranged in multiple rows. The fibers 514 can be held together by means such as thread or cloth (not shown). Multiple rows of fibers 514 have been found to provide a more stable median of diffusion than single rows of fibers. That is, the median of diffusion of multiple rows of fibers tend to move less in response to changes in the incident angle.

Figure 9 shows yet another panel 610. Sections of monofilament fibers 614 are interwoven with cross-threads 612 running in a cross direction. Each section contains a single row of between fifty and one hundred fibers 614. The monofilament fibers 614 can be made of fishing line. The cross-threads 612 can be made of fishing line or any other material. Since the cross-threads 612 occupy such a small area of the panel 610, they could even be made of an opaque material.

In view of the different embodiments above, it can be appreciated that the amount of diffusion can be controlled by changing the cross-sectional size and shape of the members, and adding extra rows of members. For example, the cross-section of the members 314 in panel 310 are larger than the cross-section of the members 14 in panel 10 (assuming that the radii of the members are equal); therefore, panel 10 has a shallower depth than panel 310 and provides less diffusion than the panel 310. Panel 210 contains a greater number of rows of members 214 than panel 10; therefore, panel 210 provides greater diffusion than panel 10.

As another example, where the members have a cross-section defined by a sector of a circle, the amount of diffusion increases as a predetermined function of a central angle of the sector. The central angle is selected to provided the desired amount of diffusion. For example, a central angle of 270° will provide more diffusion than a central angle of 180°.

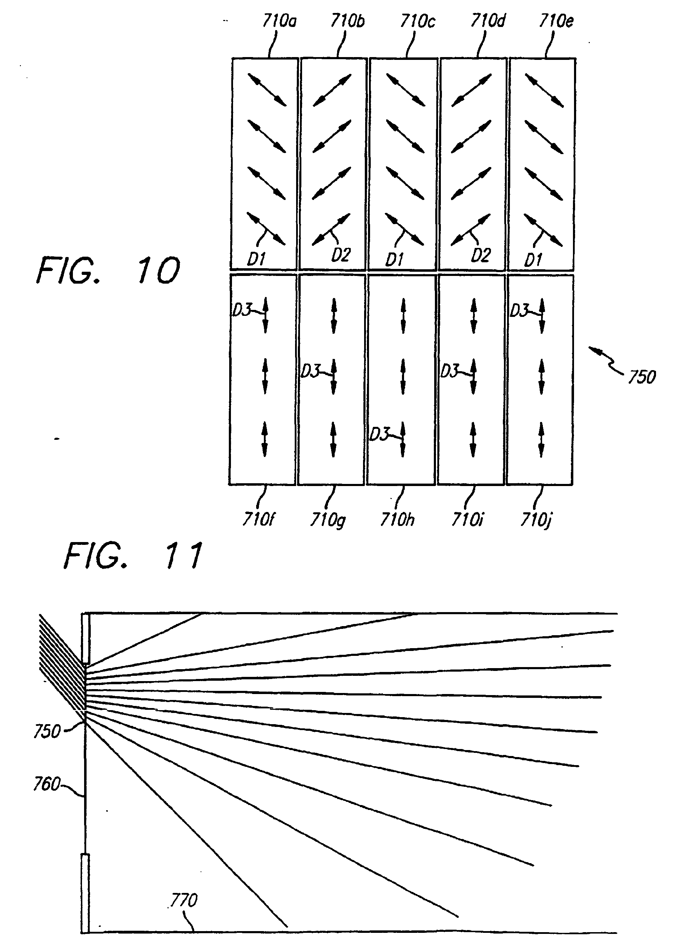

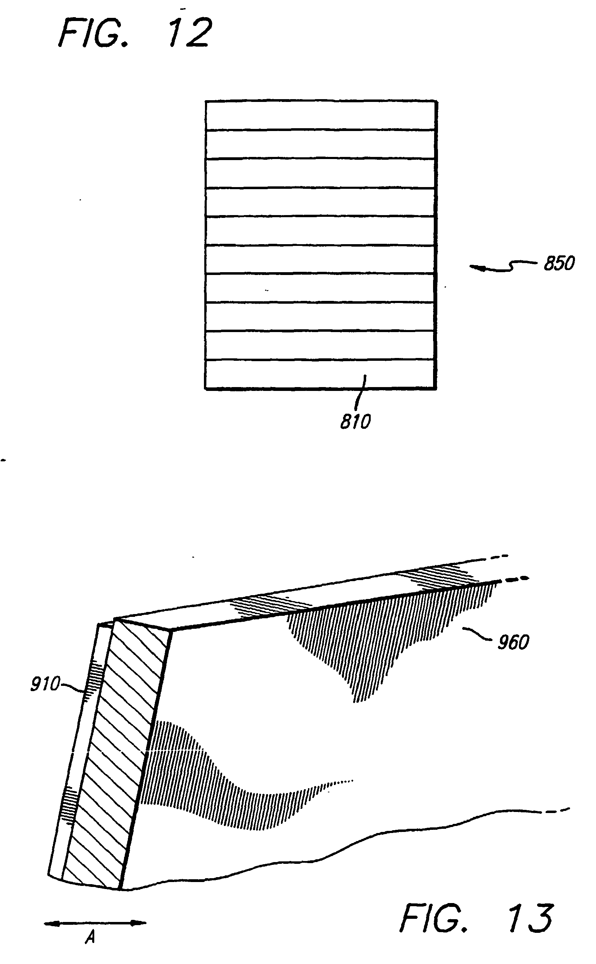

Figures 10 and 11 show a shade 750 for a window 760 according to one embodiment of the present invention. The shade 750 includes ten panels 710a-710j, each panel being of a construction similar to the panel 10 shown in Figure 1. The panels 710a-710j can be sewn together or adhered to a thin transparent backing. The shade 750 panel has three separate axes of diffusion D1, D2 and D3. The bottom panels 710f-710j have a vertical axis of diffusion D3, two of the panels 710b and 710d have a positive-sloped axis of diffusion D2, and the remaining three panels 710a, 710c and 710e have a negative-slope axis of diffusion D1. The axes D1, D2 and D3 can be selected to handle different angles of incident light. For.example, morning sunlight could be diffused along one axis D2 and afternoon sunlight could be diffused along another axis D1, while all light would be diffused along axis D3. In the alternative, different panels 710a-710j could have different numbers of rows and members of different cross-section shapes. In this way, diffusion could be controlled such that light can be redirected by the different panels into different sections of a room 770.

In alternative embodiments, the shade 750 could utilize panels that are similar construction to any of the other panels 110, 210, 310, 410, 510, and 610. If the reduction of glare is important, the shade could use a single panel 210 or a pair of any of the other panels 10, 110, 310, 410, 510 and 610. If a pair of panels is used, one panel would be mounted to one surface of the backing material, and the other panel would be mounted to the other surface of the backing material, but with the its ribs or fibers orthogonal to the ribs or fibers on the other side of the backing material.

Instead of a using the panels to form a shade 750, the panels could be used to form venetian blinds or shutters 850 as shown in Figure 12. The vertical or horizontal slats would be formed from the panels 10, 110, 210, 310, 410, 510 or 610.

In the alternative, the light diffusing panel 10, 110, 210, 310, 410, 510 or 610 could be formed as a thin film 910 that is adhered directly to the front and/or back surface of a window 960. This is shown in Figure 13.

While many illustrative embodiments of the invention have been shown and described, numerous variations and alternate embodiments will occur to those skilled in the art, without departing from the scope of the invention. For example, the ribs could be semi-elliptical in cross-section instead of semicircular, and the monofilament fibers could be elliptical in cross-section instead of circular. Accordingly, it is intended that the present invention not be limited solely to the specifically described illustrative embodiments. Various modifications are contemplated and can be made without departing from the scope of the invention as defined by the appended claims.

## Claims

1. A cover (850; 910) for a window (960), comprising:
- a sheet (12; 112; 212; 312) of light-transmissive material sized to cover the window; and
- a plurality of transparent elongated members (14; 114a, 114b; 214a, 214b; 314; 414; 514; 614) arranged side-by-side on at least one surface of the sheet, the members having longitudinal axes that are substantially parallel to one another and cross-sectional shapes that are at least partially circular with substantially smooth outer surfaces, the cross-sectional shape and size of the members an such that, for incident chief rays (I₁,I₂) lying in a plane normal to the longitudinal axes and having different angles of incidence, the medians of the corresponding angles of diffusion of light (T11, T12; T21, T22) are substantially perpendicular to the single plane
wherein
- the sheet (12; 112; 212; 312) is divided into a plurality of panels;
- the plurality of members (14; 114a, 114b; 214a, 214b; 314; 414; 514; 614) are arranged on at least one of the panels such that the direction of their longitudinal axes defines a first direction;
- the cover includes additional pluralities of members arranged on the other panels such that the directions of the longitudinal axes of said additional pluralities of members define at least one additional direction; and.
- the pluralities of members (14; 114a, 114b; 214a, 214b; 314 ; 414; 514 ; 614) are arranged such that the directions of their longitudinal axes define three different directions, morning sunlight being diffused in a plane normal to one of the directions, afternoon sunlight being diffused in a plane normal to another one of the directions.

2. The window cover (850) of claim 1, wherein the panels are arranged in slats, and wherein the window cover includes means for opening and closing the slats, whereby the window cover functions as a shutter (850).

3. The window cover (910) of claim 1, wherein the panels are thin films (910) adhered directly to the window (960).

4. The window cover (850; 910) of claim 1, wherein at least two of the panels diffuse light in different amounts.

5. A window shade (750), comprising:
- a sheet (12; 112; 212; 312) of light-transmissive material sized to cover the window (760) and divided into a plurality of sections (710a-j);
- means for hanging the sheet in front of the window; and
- a plurality of transparent elongated members (14; 114a, 114b; 214a, 214b; 314; 414; 514; 614) for each section of the sheet,
wherein
- the members in each plurality have at least partially circular cross-sections with substantially smooth outer surfaces;
- the members in each plurality are arranged side-by-side on a surface of the sheet and have longitudinal axes parallel to the other members in the same plurality, the cross-sectional shape and sitze of the members an such that, for incident chief rays (I₁,I₂) lying in a plane normal to the longitudinal axes and having different angles of incidence, the medians of the corresponding angles of diffusion of light (T11, T12; T21, T22) are substantially perpendicular to the single plane and
- at least two pluralities of members are arranged to diffuse light which is incident in the planes normal to the longitudinal axes of the respective members in at least two different planes.

6. The window shade (750) of claim 5, wherein the members (14; 114a, 114b; 214a, 214b; 314; 414; 514; 614) are arranged to diffuse light in three different planes, one of the planes being arranged to diffuse morning sunlight, another one of the planes being arranged to diffuse afternoon sunlight.

7. The window shade (750) of claim 6, wherein the members (14; 114a, 114b; 214a, 214b; 314; 414; 514; 614) of different pluralities have different cross-sectional shapes.

## Patentansprüche

1. Abdeckung (850); 910) für ein Fenster (960), umfassend:
- einen Flächenkörper (12; 112; 212; 312) aus lichtdurchlässigem Material, der so bemessen ist, dass er das Fenster abdeckt; und
- eine Mehrzahl von durchsichtigen, länglichen Elementen (14; 114a; 114b; 214a; 214b; 314; 414; 514; 614), die an mindestens einer Oberfläche des Flächenkörpers nebeneinander angeordnet sind, wobei die Elemente Längsachsen haben, die im Wesentlichen zueinander parallel sind, und Querschnittsformen, die zumindest teilweise kreisförmig mit im Wesentlichen glatten Außenflächen sind, wobei die Querschnittsform und die Größe der Elemente so gewählt sind, dass für einfallende Hauptstrahlen (I₁, I₂), die in einer zu den Längsachsen normalen Ebene liegen und unterschiedliche Einfallswinkel haben, die Mittellinien der entsprechenden Lichtstreuungswinkel (T11, T12; T21, T22) im Wesentlichen senkrecht zu der einen Ebene sind,
wobei
- der Flächenkörper (12; 112; 212; 312) in eine Mehrzahl von Blenden unterteilt ist;
- die Mehrzahl von Elementen (14; 114a; 114b; 214a; 214b; 314; 414; 514; 614) auf wenigstens einer der Blenden so angeordnet ist, dass die Richtung ihrer Längsachsen eine erste Richtung definiert;
- die Abdeckung zusätzliche Mehrzahlen von Elementen umfasst, die an den anderen Blenden so angeordnet sind, dass die Richtungen der Längsachsen der zusätzlichen Mehrzahlen von Elementen wenigstens eine zusätzliche Richtung definieren; und
- die Mehrzahlen von Elementen (14; 114a; 114b; 214a; 214b; 314; 414; 514; 614) so angeordnet sind, dass die Richtungen ihrer Längsachsen drei verschiedene Richtungen definieren, wobei morgendliches Sonnenlicht in einer Ebene diffus gestreut wird, die normal zu einer der Richtungen ist, und nachmittägliches Sonnenlicht in einer Ebene diffus gestreut wird, die normal zu einer anderen der Richtungen ist.

2. Fensterabdeckung (850) nach Anspruch 1, wobei die Blenden in Form von Latten angeordnet sind, und die Fensterabdeckung Mittel zum Öffnen und Schließen der Latten umfasst, wodurch die Fensterabdeckung als Jalousie (850) fungiert.

3. Fensterabdeckung (910) nach Anspruch 1, wobei die Blenden dünne Schichten (910) sind, die direkt am Fenster (960) anhaften.

4. Fensterabdeckung (850; 910) nach Anspruch 1, wobei wenigstes zwei der Blenden Licht in unterschiedlicher Stärke diffus streuen.

5. Fensterabschattung (750), umfassend:
- einen Flächenkörper (12; 112; 212; 312) aus lichtdurchlässigem Material, der so bemessen ist, dass er das Fenster (760) abdeckt, und in eine Mehrzahl von Abschnitten (710a-j) unterteilt ist;
- ein Mittel, um den Flächenkörper vor das Fenster zu hängen; und
- eine Mehrzahl von durchsichtigen, länglichen Elementen (14; 114a; 114b; 214a; 214b; 314; 414; 514; 614) für jeden Abschnitt des Flächenkörpers,
wobei
- die Elemente in jeder Mehrzahl wenigstens teilweise kreisförmige Querschnitte mit im Wesentlichen glatten Außenflächen haben;
- die Elemente in jeder Mehrzahl nebeneinander an einer Oberfläche des Flächenkörpers angeordnet sind und Längsachsen haben, die parallel zu den anderen Elementen in derselben Mehrzahl sind, wobei die Querschnittsform und die Größe der Elemente so gewählt sind, dass für einfallende Hauptstrahlen (I₁, I₂), die in einer zu den Längsachsen normalen Ebene liegen und unterschiedliche Einfallswinkel haben, die Mittellinien der entsprechenden Lichtstreuungswinkel (T11, T12; T21, T22) im Wesentlichen senkrecht zu der einen Ebene sind; und
- wenigstens zwei Mehrzahlen von Elementen so angeordnet sind, dass sie Licht, das in den Ebenen einfällt, die normal zu den Längsachsen der jeweiligen Elemente sind, in wenigstens zwei Ebenen diffus streuen.

6. Fensterabschattung (750) nach Anspruch 5, wobei die Elemente (14; 114a; 114b; 214a; 214b; 314; 414; 514; 614) so angeordnet sind, dass Licht in drei unterschiedlichen Ebenen diffus gestreut wird, wobei eine der Ebenen so angeordnet ist, dass morgendliches Sonnenlicht diffus gestreut wird, und eine andere der Ebenen so angeordnet ist, dass nachmittägliches Sonnenlicht diffus gestreut wird.

7. Fensterabschattung (750) nach Anspruch 6, wobei die Elemente (14; 114a; 114b; 214a; 214b; 314; 414; 514; 614) von unterschiedlichen Mehrzahlen unterschiedliche Querschnittsformen haben.

## Revendications

1. Occultation (850 ; 910) pour une fenêtre (960), comprenant :
- une plaque (12 ; 112 ; 212 ; 312) en un matériau translucide, dimensionnée pour recouvrir la fenêtre ; et
- une pluralité de pièces allongées transparentes (14 ; 114a, 114b ; 214a, 214b ; 314 ; 414 ; 514 ; 614) disposées côte à côte sur au moins l'une des surfaces de la plaque, lesdites pièces présentant des axes longitudinaux qui sont substantiellement parallèles les uns aux autres et des configurations de section transversale qui sont au moins partiellement circulaires, avec des surfaces extérieures sensiblement lisses, la configuration de section transversale et la dimension desdites pièces étant de façon telle que, pour des rayonnements principaux incidents (I₁, I₂) situés dans un plan normal aux axes longitudinaux et présentant des angles d'incidence différents, les bissectrices des angles correspondants de diffusion de lumière (T11, T12; T21, T22) soient substantiellement perpendiculaires au plan unique,
dans laquelle
- la plaque (12 ; 112 ; 212 ; 312) est scindée en une pluralité de panneaux ;
- la pluralité de pièces (14 ; 114a, 114b ; 214a, 214b ; 314 ; 414 ; 514 ; 614) est disposée sur au moins l'un desdits panneaux, de telle sorte que la direction de leurs axes longitudinaux définisse une première direction ;
- ladite occultation possède des pluralités additionnelles de pièces disposées sur les autres panneaux, de telle sorte que les directions des axes longitudinaux desdites pluralités additionnelles de pièces définissent au moins une direction supplémentaire ; et.
- les pluralités de pièces (14 ; 114a, 114b ; 214a, 214b ; 314 ; 414 ; 514 ; 614) sont agencées de façon que les directions de leurs axes longitudinaux définissent trois directions différentes, la lumière solaire du matin étant diffusée dans un plan normal à l'une des directions, la lumière solaire de l'après-midi étant diffusée dans un plan normal à une autre desdites directions.

2. Occultation (850) de fenêtre selon la revendication 1, dans laquelle les panneaux sont agencés en des lattes, et ladite occultation de fenêtre comporte des moyens pour ouvrir et fermer lesdites lattes, de sorte que ladite occultation de fenêtre agit comme une persienne (850).

3. Occultation (910) de fenêtre selon la revendication 1, dans laquelle les panneaux sont des pellicules minces (910) directement collées sur la fenêtre (960).

4. Occultation (850 ; 910) de fenêtre selon la revendication 1, dans laquelle au moins deux, parmi lesdits panneaux, diffusent la lumière selon des quantités différentes.

5. Store (750), comprenant :
- une plaque (12 ; 112 ; 212 ; 312) en un matériau translucide, dimensionnée pour recouvrir la fenêtre (760) et subdivisée en une pluralité de segments (710a-j) ;
- des moyens pour suspendre la plaque devant la fenêtre ; et
- une pluralité de pièces allongées transparentes (14 ; 114a, 114b ; 214a, 214b ; 314 ; 414 ; 514 ; 614) pour chaque segment de la plaque,
dans lequel
- lesdites pièces de chaque pluralité comportent des sections transversales au moins partiellement circulaires, avec des surfaces extérieures substantiellement lisses,
- les pièces de chaque pluralité sont disposées côte à côte sur une surface de la plaque et présentent des axes longitudinaux parallèles aux autres pièces dans la même pluralité, la configuration de section transversale et la dimension desdites pièces étant de façon telle que, pour des rayonnements principaux incidents (I₁, I₂) situés dans un plan normal aux axes longitudinaux et présentent des angles d'incidence différents, les bissectrices des angles correspondants de diffusion de lumière (T11, T12; T21, T22) soient substantiellement perpendiculaires au plan unique, et
- au moins deux pluralités de pièces sont agencées pour diffuser, dans au moins deux plans différents, de la lumière qui est incidente dans les plans normaux aux axes longitudinaux des pièces respectives.

6. Store (750) selon la revendication 5, dans lequel les pièces (14 ; 114a, 114b ; 214a, 214b ; 314 ; 414 ; 514 ; 614) sont agencées pour diffuser de la lumière dans trois plans différents, l'un desdits plans étant agencé pour diffuser la lumière solaire du matin, un autre desdits plans étant agencé pour diffuser la lumière solaire de l'après-midi.

7. Store (750) selon la revendication 6, dans lequel les pièces (14 ; 114a, 114b; 214a, 214b ; 314 ; 414 ;514 ; 614) de pluralités différentes présentent des configurations de section transversale différentes.
